# EUROPEAN PATENT SPECIFICATION

(11) **EP 3 259 879 B1**
(45) Date of publication and mention of the grant of the patent: **21.10.2020**
(21) Application number: 15736142.9
(22) Date of filing: 26.06.2015
(51) Int. Cl.: H04L 12/14, H04W 4/24, H04M 15/00

(54) **DIFFERENTIAL CHARGING FOR LICENSED AND UNLICENSED SPECTRUM USAGE**
DIFFERENZIERTE ABRECHNUNG FÜR LIZENZIERTE UND UNLIZENZIERTE FREQUENZNUTZUNG
TARIFICATION DIFFÉRENCIÉE POUR L'UTILISATION DU SPECTRE SOUS LICENCE ET SANS LICENCE

(30) Priority: 17.02.2015 US 201562117374 P
(43) Date of publication of application: 27.12.2017
(73) Proprietor: Intel Corporation, Santa Clara, CA 95054 (US)
(72) Inventor: SIROTKIN, Alexander, 49527 Petach Tikva M (IL); ZHU, Jing, Portland, Oregon 97229 (US); HIMAYAT, Nageen, Fremont, California 94539 (US)
(74) Representative: Barnfather, Karl Jon
(86) International application number: PCT/US2015/038098
(87) International publication number: WO 2016/133553

(56) References cited:
- WO-A1-2013/113387
- WO-A1-2014/130446
- WO-A1-2015/073130
- GB-A- 2 498 749

## Description

### Field

Embodiments of the present disclosure generally relate to the field of wireless communication, and more particularly, to methods and apparatuses for charging architectures for wireless networks.

### Background

It is expected that in Release 13 (Rel-13), Third Generation Partnership Project (3GPP) will define two new processes for using unlicensed spectrum: Long Term Evolution-Unlicensed (LTE-U) / License Assisted Access (LAA) and Long Term Evolution (LTE) / Wireless Local Area Network (WLAN) aggregation. In both technologies, the usage of unlicensed spectrum is transparent to the evolved packet core (EPC), which is one of the biggest advantages of these technologies. However, given current architectures, charging differently for licensed and unlicensed spectrum usage may be difficult.

WO 2014130446 A1 relates to systems, methods, and instrumentalities to implement charging, e.g., provide charging information associated with content provided to an end user (e.g., a wireless transmit/receive unit (WTRU)). A. gateway device detects a request to a content provider and sends the request to the content provider. The gateway device sends the request to the content provider via a non-cellular interface bypassing a core network. The gateway device sends an authorization message to the network. The gateway device may transmit the authorization message. The gateway device receives an acknowledgement of the first authorization message from the PCRF entity, for example. The gateway device receives traffic associated with the request from the content provider, e.g., via the non- cellular interface. The gateway device sends a charging message to a charging entity.

GB 2498749 A relates to coordination of the use of licensed and unlicensed frequency band by wireless communication devices capable of operating in either frequency band are disclosed. An entity such as a network manager or a mobility management entity collects data from devices such as Home eNBs, UEs, and WLAN Access Points (APs) and mobile user station (STAs), including through direct virtual connections to a WLAN AP, an Access Network Discovery and Selection Function (ANDSF) and an Home eNB. The entity determines coordination policies and controls and delivers these policies and controls to Home eNBs for implementation. In this way, operation of mobile devices capable of communicating in either frequency band is coordinated. An embodiment describes use within Long Term Evolution (LTE) architecture and the unlicensed frequencies being within the whitespace band, i.e. unused television frequencies.

WO 2014/130446 A1 relates to implementing charging, e.g., provide charging information associated with content provided to an end user (e.g., a wireless transmit/receive unit (WTRU)). A gateway device may detect a request to a content provider and send the request to the content provider via a non-cellular interface bypassing a core network. The gateway device may send an authorization message to the network and receive an acknowledgement of the first authorization message from the PCRF entity. The gateway device may receive traffic associated with the request from the content provider, e.g., via the non- cellular interface and may also send a charging message to a charging entity. The gateway device may send the traffic toward the WTRU.

WO 2015/073130 A1 relates to techniques are described for traffic volume determination and reporting by an access node and/or a node of a core network in a wireless communications system. One or more wireless connections may be established with a user equipment (UE) to serve one or more streams of traffic using a first cell and a second cell, which may have different cell characteristics. A first traffic volume for the UE may be determined based on traffic volume served over the first cell, and a second traffic volume for the UE may be determined based on traffic volume served over the second cell. A charging data record may be generated based on the first traffic volume and the second traffic volume. Traffic volume served over the first cell then may be charged at a different rate that traffic served over the second cell. WO 2013/113387 A1 discloses a method for allocating resources of a multi-RAT (Radio Access Technology system) whereby the most refined spectral distinction performed in the reporting is at frequency band level, not at EPS bearer level.

### Summary

The invention is defined by the subject matter of the independent claims. Advantageous embodiments are subject to the dependent claims.

### Brief Description of the Drawings

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
Figure 1 illustrates a charging architecture in accordance with various embodiments.
Figure 2 illustrates another charging architecture in accordance with various embodiments.
Figure 3 illustrates another charging architecture in accordance with various embodiments.
Figure 4 illustrates an electronic device in accordance with various embodiments.
Figure 5 illustrates a reporting procedure in accordance with some embodiments.

### Detailed Description

Illustrative embodiments of the present disclosure include, but are not limited to, methods, systems, computer-readable media, and apparatuses for charging architectures in cellular networks.

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc., in order to provide a thorough understanding of the various aspects of the claimed invention. However, it will be apparent to those skilled in the art having the benefit of the present disclosure that the various aspects of the invention claimed may be practiced in other examples that depart from these specific details. In certain instances, descriptions of well-known devices, circuits, and methods are omitted so as not to obscure the description of the present invention with unnecessary detail.

Further, various operations will be described as multiple discrete operations, in turn, in a manner that is most helpful in understanding the illustrative embodiments; however, the order of description should not be construed as to imply that these operations are necessarily order dependent. In particular, these operations need not be performed in the order of presentation.

The phrase "in some embodiments" is used repeatedly. The phrase generally does not refer to the same embodiments; however, it may. The terms "comprising," "having," and "including" are synonymous, unless the context dictates otherwise.

The phrases "A or B," "A/B," and "A and/or B" mean (A), (B), or (A and B).

As used herein, the term "circuitry" refers to, is part of, or includes hardware components such as an Application Specific Integrated Circuit (ASIC), an electronic circuit, a logic circuit, a processor (shared, dedicated, or group) and/or memory (shared, dedicated, or group) that are configured to provide the described functionality. In some embodiments, the circuitry may execute one or more software or firmware programs to provide at least some of the described functionality.

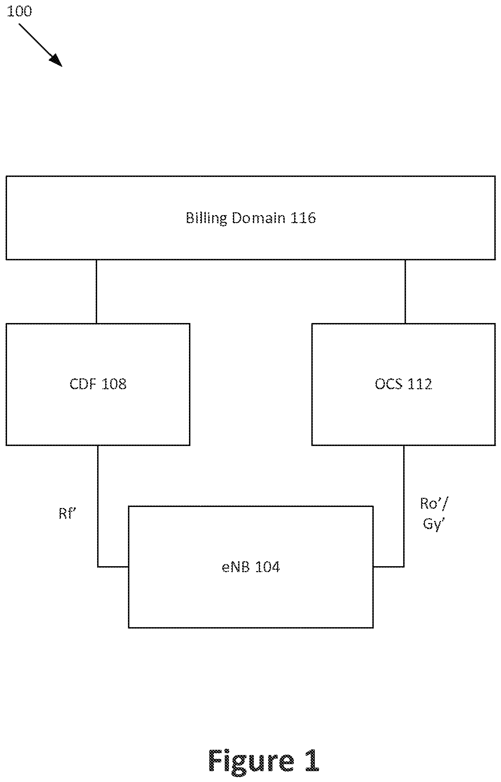

Figure 1 schematically illustrates a charging architecture 100 in accordance with various embodiments. The charging architecture 100 includes an evolved node B (eNB) 104 coupled with a charging data function (CDF) 108 and an online charging system (OCS) 112. The CDF 108 and the OCS 112 may be coupled with a billing domain 116. The eNB 104, CDF 108, and OCS 112 may be part of a cellular network such as a 3GPP LTE Advanced (LTE-A) network. The eNB 104 may be in a radio access network (RAN) portion of the LTE-A network and the CDF 108 and OCS 112 may be in a core network (CN) portion of the LTE-A network. In other embodiments, other network technologies may be utilized.

In general, the CDF 108 may be a logical charging function to provide offline charging procedures. The CDF 108 may provide offline charging procedures by collecting charging information for network resource usage by a user equipment (UE) concurrently with the resource usage by the UE. The CDF 108 may generate a charging data record (CDR) file that includes details about the resource usage by the UE. The CDF 108 may report the CDR file to the billing domain 116 after the resource usage has occurred. Thus, offline charging is a mechanism in which the charging information does not affect, in real-time, the service rendered.

The OCS 112 may include a logical charging function to provide online charging procedures. The OCS 112 may collect charging information for network resource usage concurrently with the resource usage and generate and report the CDR file in a manner similar to the CDF 108. However, unlike the CDF 108, the OCS 112 may provide an authorization for network resource usage prior to the occurrence of the actual resource usage. The authorization may be granted by the OCS 112 upon request from the network, for example, from the eNB 104.

The OCS 112 may include a number of components to facilitate online charging procedures. These components may include, but are not limited to, an online charging function (OCF) that includes a session-based charging function and an event-based charging function; a charging gateway function; and a rating function. The components of the OCS 112 may be similar to those described in 3GPP Technical Specification (TS) 32.296 v12.3.0 (2014-12).

The billing domain 116 may receive CDR files from the CDF 108 or the OCS 112 for purposes of subscriber billing, inter-operator accounting, or other types of statistical analysis or use. The billing domain 116 may include an operator's billing system or mediation device.

With the exception of the differences noted herein, the CDF 108, OCS 112, and the billing domain 116 may operate consistently with descriptions provided in 3GPP TS 32.240, v12.6.0 (2014-12) and related TSs, for example, TS 32.296.

Various charging scenarios may be implemented by an operator through the billing domain. In the simplest scenario, an operator may not make a distinction on whether traffic corresponding to a particular bearer is transported over licensed or unlicensed spectrum (using the additional spectrum to augment the capacity of their deployment in a manner transparent to a user). On the other extreme, the operator may allow all use of unlicensed traffic to be free of charge. More generally, the operator may apply, or wish to apply, different charging rates or authorizations for licensed and unlicensed spectrum usage. Differentiated service may require the usage across different radio access technologies (RATs) to be tracked separately within a charging architecture.

A bearer, as used herein, may be a link between two points, which is defined by a certain set of characteristics, for example, quality of service attributes. The bearer may be an evolved packet system (EPS) bearer between, for example, a UE and a packet gateway (P-GW), or some other type of bearer. Bearers may provide access to a cellular network using one or more RATs.

Unlicensed spectrum or licensed-exempt spectrum, as used herein, refers to portions of a radio spectrum that users can access for wireless services without an explicit license from a regulatory authority such as, but not limited to, Federal Communications Commission (FCC). Licensed spectrum, as used herein, refers to portions of the radio spectrum that are licensed, exclusively or non-exclusively, to a licensee by a regulatory authority such as, but not limited to, the FCC. The licensed spectrum may allow a licensee use of particular frequencies or channels in particular locations for commercial services.

To facilitate the application of different charging rates or authorizations for licensed and unlicensed spectrum usage, the operator may need to know how much traffic was delivered (or received) on a per user/per bearer level using licensed and unlicensed spectrum. This information may be relevant for both online and offline charging scenarios. In the online charging scenario, the operator may also want the network to obtain authorization (on per bearer/per user basis) for licensed and unlicensed spectrum usage.

To facilitate differential charging of traffic going on licensed and unlicensed spectrum, embodiments of the present disclosure include the eNB 104 directly interfacing with the CDF 108 and the OCS 112 as shown in Figure 1. In particular, the eNB 104 may interface with the CDF 108 via an Rf' interface to exchange offline charging information; and may interface with the OCS 112 via an Ro'/Gy' interface to exchange online charging information.

Communication over the Rf', Ro', and Gy' interfaces (also referred to as "reference points" in some embodiments) may be performed with respect to corresponding Rf', Ro', and Gy' protocols. The Rf', Ro', and Gy' interfaces/protocols may be similar to respective Rf, Ro, and Gy interfaces/protocols described in TS 32.240 and related TSs (e.g., 3GPP TS 32.299 v12.7.0 (2014-12)), with the exception that the Rf' interface is between the eNB 104 and the CDF 108 and the Ro'/Gy' interfaces are between the eNB 104 and the OCS 112.

Briefly, the Rf' interface may support provision of information related to charging events for offline charging from the eNB 104 to the CDF 108 and may further support acknowledgments for these events from the CDF 108 to the eNB 104. Information related to charging events may also be referred to as charging information. The Rf' protocol crossing the Rf' interface may support real-time transactions, stateless mode (for example, event-based charging) and stateful mode (for example, session-based charging) of operation; and may further provide its own reliability mechanism, for example, retransmission of charging events, to facilitate transmission over unreliable transports.

The Ro' interface may support provision of information related to charging events for online charging from the eNB 104 to the OCS 112 and may further support acknowledgments for these events from the OCS 112 to the eNB 104. The acknowledgment may grant or reject a network resource usage that is requested in the charging event according to a decision taken by the OCS 112. The Ro' protocol crossing the Ro' interface may support real-time transactions, stateless mode (for example, event-based charging) and stateful mode (for example, session-based charging) of operation; and may further provide its own reliability mechanism, for example, retransmission of charging events, to facilitate transmission over unreliable transports.

The Gy' interface may be similar to the Ro' interface.

Offline charging information transferred via the Rf' interface may include amounts of traffic per bearer delivered via licensed and unlicensed spectrum. In order for the charging system to correlate this information with information received from other network nodes (for example, a packet gateway (P-GW) and a serving gateway (S-GW)), the charging information may further include bearer identifiers. In some embodiments, offline charging information may further include a bearer offload time (for example, how long, for example, in seconds, a bearer has been offloaded to an unlicensed band since the last reporting); downlink bearer offload volume (for example, how much load, for example, in kilobytes, of a bearer has been offloaded to unlicensed band in the downlink since the last reporting); uplink bearer offload volume (for example, how much load, for example, in kilobytes, of the EPS bearer has been offloaded to unlicensed band on the uplink since the last reporting); and policies governing the use of licensed and unlicensed bands.

Online charging information transferred via the Ro'/Gy' interface may include information similar to the offline charging information transferred via the Rf' interface. The online charging information transferred via the Ro'/Gy' interface may further include a request, from the eNB 104, for authorization to use licensed or unlicensed spectrum on per bearer/per user level. This authorization request may be done when the bearer is established or periodically.

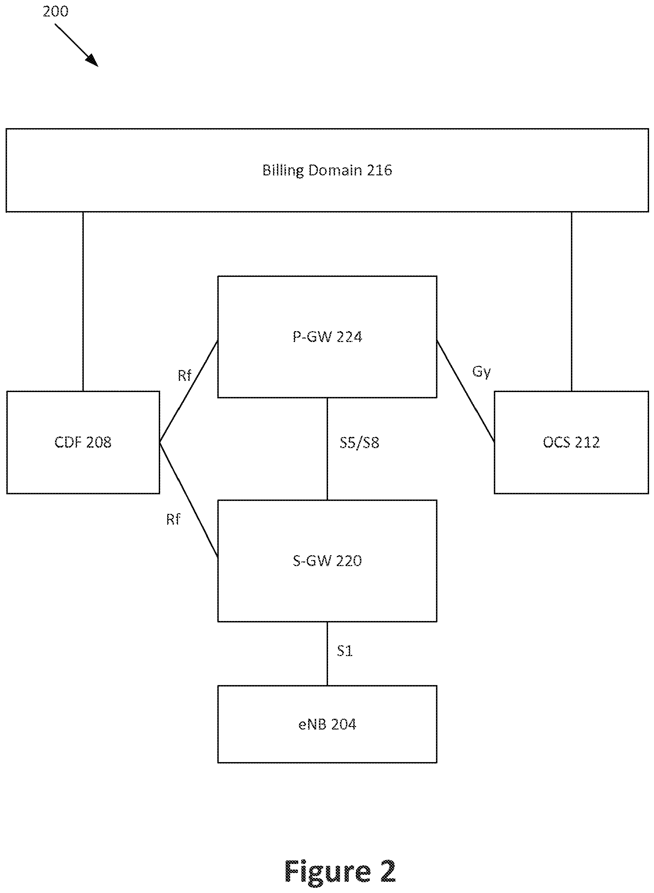

Figure 2 schematically illustrates another charging architecture 200 in accordance with various embodiments. The charging architecture 200 may include an eNB 204, CDF 208, OCS 212, and billing domain 216 that are similar to like-named elements discussed above with respect to Figure 1, except as otherwise noted. Figure 2 further shows S-GW 220 and P-GW 224. Briefly, the S-GW 220 may be responsible for handovers with neighboring eNBs and for data transfer in terms of packets across a user plane; and the P-GW 224 may be responsible to act as an anchor mobility between 3GPP and non-3GPP technologies.

The CDF 208 may communicate with S-GW 220 and P-GW 224 via Rf interfaces; OCS 212 may communicate with P-GW 224 via a Gy interface; P-GW 224 may communicate with S-GW 220 via an S5/S8 interface; and S-GW 220 may communicate with eNB 204 via an S1 interface. These interfaces may be similar to those described in existing TSs, for example, TS 32.240 and 3GPP TS 23.401 v13.1.0 (2014-12). However, some of these interfaces are updated to carry charging information to allow the charging architecture 200 to provide differential charging of traffic going on licensed and unlicensed spectrum as described below.

In some embodiments, the S1-AP protocol used on the S1 interface may be enhanced to communicate offline and online charging information, such as that described above, from the eNB 204 to the S-GW 220. The S-GW 220 may relay this charging information to the CDF 208. Alternatively, the S-GW 220 may pass the charging information to the P-GW 224 using an S5/S8 interface that is enhanced to convey such information. The P-GW 224 may then communicate the charging information to the CDF 208 via the Rf interface or to the OCS 212 via the Gy interface.

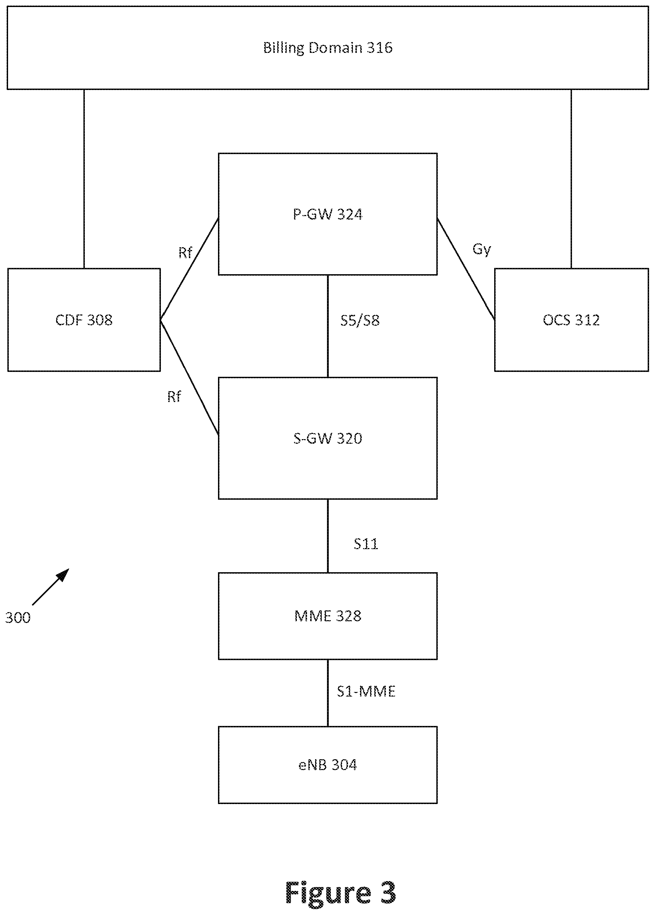

Figure 3 schematically illustrates another charging architecture 300 in accordance with various embodiments. The charging architecture 300 may include an eNB 304, CDF 308, OCS 312, billing domain 316, S-GW 320, and P-GW 324 that are similar to like-named elements discussed above with respect to Figures 1 or 2, except as otherwise noted. The charging architecture 300 further includes a mobility management entity (MME) 328. Briefly, the MME 328 may be responsible for tracking and paging procedures with respect to the UE. The MME 328 may also be involved in bearer activation/deactivation.

In addition to the interfaces shown and discussed above with respect to Figure 2, the charging architecture 300 includes an S11 interface by which the S-GW 320 and the MME 328 may communicate; and an SI-MME interface by which the MME 328 and the eNB 304 may communicate. These interfaces may be similar to those described in existing TSs, for example, TS 32.240 and 3GPP TS 23.401. However, some of these interfaces are updated to carry charging information to allow the charging architecture 300 to provide differential charging of traffic going on licensed and unlicensed spectrum as described below.

In particular, the SI-MME interface may be enhanced to carry charging information, such as that described above, between the eNB 304 and the MME 328; and the S11 interface may be enhanced to carry the charging information between the S-GW 320 and the MME 328.

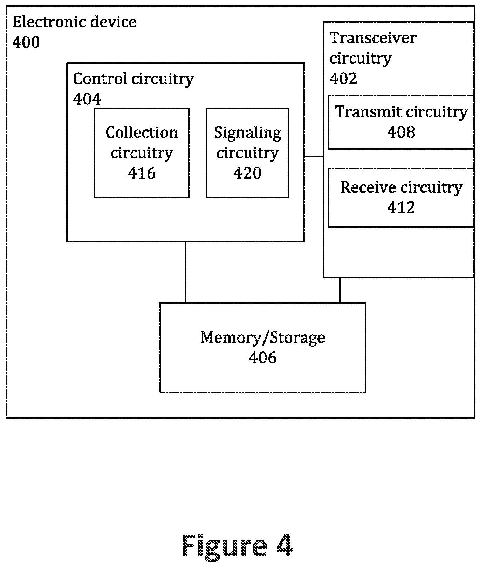

Figure 4 illustrates an electronic device 400 in accordance with some embodiments. The electronic device 400 may be an eNB, S-GW, P-GW, MME, CDF, or OCS as described elsewhere in the present disclosure. In embodiments, the electronic device 400 may include transceiver circuitry 402, control circuitry 404, and memory/storage 406 coupled with one another at least as shown. The transceiver circuitry 402 may include both transmit circuitry 408 and receive circuitry 412. The control circuitry 404 may include collection circuitry 416, which may also be referred to as statistics circuitry, and signaling circuitry 420.

The transceiver circuitry 402 or control circuitry 404 may be suitably configured with hardware, software, or firmware to perform the operation described with respect to devices discussed herein. In particular, the transceiver circuitry 402 or control circuitry 404 may include one or more single-core or multi-core processors coupled with memory-storage and configured to execute instructions stored in the memory-storage to enable various applications or operating systems to run on the system. The processors may include any combination of general-purpose processors or dedicated processors, for example, communication processors (for example, baseband processors), application processors, digital signal processors, etc.

The memory/storage 406 may be used to load and store data or instructions for the electronic device 400. Memory/storage for one embodiment may include any combination of suitable volatile memory (e.g., dynamic random access memory (DRAM)) and/or non-volatile memory (e.g., Flash memory).

In general, the collection circuitry 416 may be configured to perform higher-layer operations related to the collection, reporting, and processing of the charging information; the signaling circuitry 420 may be configured for generating and processing signals according to parameters associated with relative interfaces/protocols; and the transceiver circuitry 402 may be configured for providing the transmission/reception of the signals over the appropriate interfaces.

In embodiments in which the electronic device 400 is an eNB, the signaling circuitry 420 may include baseband circuitry to handle various radio control functions (e.g., signal modulation/demodulation, encoding/decoding, etc.) that enable communication with one or more radio networks via the transceiver circuitry 402, which may include circuitry for the radio-frequency (RF) communications. In such embodiments, the transceiver circuitry 402 may include RF circuitry such as switches, filters, amplifiers, etc. to facilitate communication with the wireless network via one or more antennas. The RF communications may take place using, for example, a plurality of RATs. The RF communications may involve the provision of radio resources to UEs in both licensed and unlicensed bands. For example, the RF communications may involve WLAN/LTE aggregation communications, LTE-U/LAA communications, etc.

In addition to having circuitry for radio-frequency communications, when the electronic device 400 is an eNB, the signaling circuitry 420 and transceiver circuitry 402 may include circuitry for communication over other wired or wireless communication interfaces. For example, the signaling circuitry 420 and transceiver circuitry 402 may include circuitry to communicate over an Rf' interface with a CDF and circuitry to communicate over an Ro'/Gy' interface with an OCS such as that described in Figure 1. In some embodiments, the signaling circuitry 420 and transceiver circuitry 402 may include circuitry to communicate over an S1 interface with an S-GW such as described in Figure 2; or circuitry to communicate over an S1-MME interface with an MME such as described in Figure 3.

In embodiments in which the electronic device 400 is a CDF, the signaling circuitry 420 and transceiver circuitry 402 may include circuitry for communication over an Rf' interface with an eNB such as that described in Figure 1; or circuitry to communicate over an Rf interface with S-GW or P-GW as described in Figures 2 or 3.

In embodiments in which the electronic device 400 is an OCS, the signaling circuitry 420 and transceiver circuitry 402 may include circuitry for communication over an Ro'/Gy' interface with an eNB as described in Figure 1; or circuitry to communicate over a Gy interface with a P-GW as described in Figures 2 or 3.

In embodiments in which electronic device 400 is an S-GW, the signaling circuitry 420 and transceiver circuitry 402 may include circuitry for communication over an S1 interface with an eNB, an Rf interface with a CDF, or an S5/S8 interface with P-GW as described in Figure 2; or circuitry for communication over an S11 interface with an MME, an Rf interface with a CDF, or an S5/S8 interface with P-GW as described in Figure 3.

In embodiments in which electronic device 400 is a P-GW, the signaling circuitry 420 and transceiver circuitry 402 may include circuitry for communication over an S5/S8 interface with an S-GW, an Rf interface for communication with a CDF, or a Gy interface for communication with an OCS as described in Figures 2 or 3.

In embodiments in which the electronic device 400 is an eNB, the control circuitry 404, and the collection circuitry 416, in particular, may identify, collect, and report charging information related to licensed spectrum resource usage and unlicensed spectrum resource usage related to one or more bearers in a wireless network from the perspective of the eNB as described herein. This may include, but is not limited to, measuring traffic over licensed and unlicensed spectrum, generating reports, detecting reporting triggers, and sending report through components of a charging architecture.

In embodiments in which the electronic device 400 is a CDF or an OCS, the collection circuitry 416 may control collection and reporting of charging information from the perspective of the respective CDF/OCS. This may include, but is not limited to, receiving and responding to authorization requests (for example, in an online charging scenario); receiving reports from an eNB or other components of a charging architecture; requesting reports from the eNB; generating a CDR; or transmitting the CDR to the billing domain to facilitate billing functions.

The control circuitry 404 may be included in or implemented by a chip, chipset, or other collection of programmed or preconfigured circuitry. Similarly, the transceiver circuitry 402 may be included in and/or implemented by a chip, chipset, or other collection of programmed or preconfigured circuitry. In various embodiments, some or all of the transceiver circuitry 402 and control circuitry 404 may be incorporated in a common chip, chipset, or other collection of programmed or preconfigured circuitry.

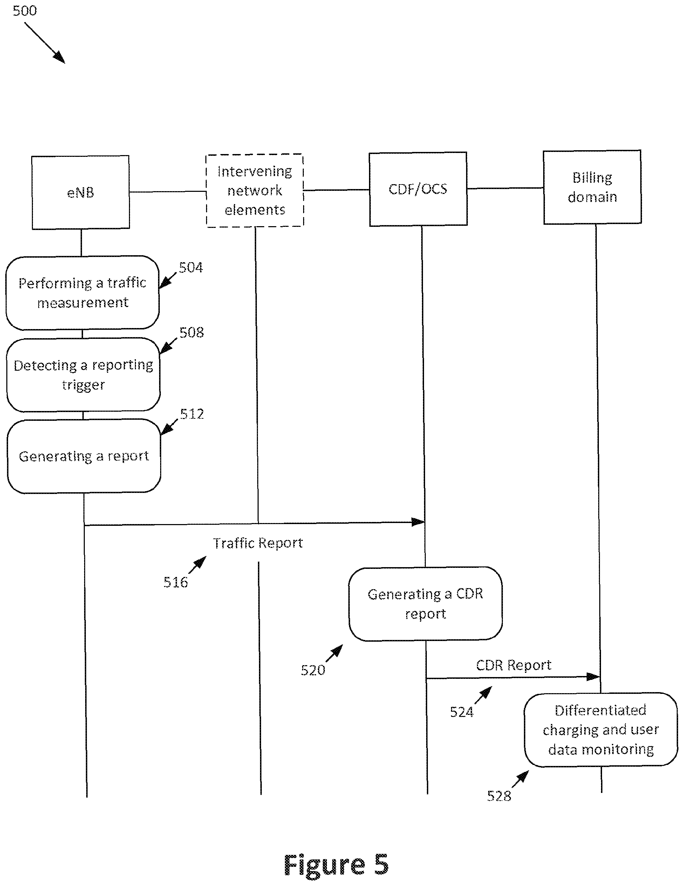

Figure 5 illustrates a flowchart that describes a reporting procedure 500 in accordance with some embodiments. In some embodiments, the operations described with respect to the reporting procedure 500 may be performed by components of an electronic device such as that described above with respect to Figure 4. The reporting procedure 500 may equally apply to LTE-U/LAA and LTE/WLAN aggregation technologies, even though these may be very different on an access stratum level.

At 504, the reporting procedure 500 may include an eNB performing a traffic measurement to determine various charging information. The charging information may be similar to that described above. The traffic measurement may be performed by collection circuitry in the eNB such as that described above with respect to Figure 4. The collection circuitry may monitor and record traffic characteristics with respect to bearers that may carry unlicensed spectrum traffic. The traffic measurement may be performed for each individual bearer and may be performed separately for uplink and downlink.

In some embodiments, an operator may designate bearers as exclusively for unlicensed spectrum or exclusively for licensed spectrum. For example, the RAT type of each bearer may be configured at the eNB. The eNB may then measure a usage of individual bearers and record that usage, along with an associated RAT type in some embodiments, in the traffic measurement. The final charging per UE/bearer may be completed based on the authorized RAT type of each bearer.

In some embodiments, usage of licensed/unlicensed RAT may be more dynamic than the previous example, and may even allow for simultaneous use of both RATs. Various embodiments may include different processes for performing a traffic measurement at 504 configured for online and offline charging processes.

For offline or online charging, the eNB may record the usage across both types of spectrum in the charging information.

At 508, the reporting procedure 500 may include an eNB, or the collection circuitry within the eNB, in particular, detecting a reporting trigger. The reporting trigger may be a periodic or event-based based trigger. In some embodiments, the reporting trigger may be a change in a specific bearer configuration. For example, a bearer that is exclusively configured for unlicensed spectrum traffic may be reconfigured for licensed spectrum traffic or a mix of unlicensed and licensed spectrum traffic. At the time of such a reconfiguration, it may be desirable to report a measure of traffic pertaining to the period in which the bearer was exclusively configured for unlicensed spectrum traffic.

In some embodiments, the reporting trigger may relate to a conclusion of a communication session. This may be, for example, at a radio resource control (RRC) connection release; when a UE transitions into an idle mode; performs a handover; etc.

In some embodiments, the reporting trigger may relate to predetermined usage limits based on traffic volume or time. For example, for online charging, an authorization may either be directly negotiated by the eNB or configured at the eNB by S-GW/P-GW based on negotiated limits. In such instances, per-RAT usage limits may be set so that charging reports or quotas do not need to be negotiated in real-time. The eNB may detect a reporting trigger when these usage limits are met.

The network may further configure a scheduling priority for the eNB to tailor its scheduling policy in light of usage limits. For example, since an operator may charge differently for licensed and unlicensed usage, the operator may configure a policy at the eNB so that the eNB schedules a user over a band where it is likely to cost less. For example, if usage of unlicensed spectrum is free, then the policy configured at the eNB may prioritize scheduling of the UE over unlicensed spectrum before licensed spectrum.

At 512, the reporting procedure 500 may include the eNB, or the collection/signaling circuitry within the eNB, generating a report. The generating of the report may be in response to the detecting of the reporting trigger 508 and may be based on, for example, information related to the traffic measurement performed at 504.

At 516, the reporting procedure 500 may include transmission of the traffic report. The report may be transmitted via transceiver circuitry of the eNB to CDF/OCS. In some embodiments, for example, in the charging architecture 100, the report may be transmitted directly to the CDF/OCS. In other embodiments, for example, in charging architectures 200 or 300, the report may be transmitted through one or more intervening network elements. The intervening network elements may include an MME, an S-GW, or a P-GW.

At 520, the reporting procedure 500 may include a CDF/OCS generating a CDR report. The CDR report may include a CDR file that is generated with charging information from the traffic report. A single CDR file may be constructed to include charging information related to a single charging event or multiple charging events. The content and format of CDR files may be similar to those described in, for example, 3GPP TS 32.250 v12.3.0 (2014-12).

At 524, the reporting procedure 500 may include transmitting the CDR report from the CDF/OCS to a billing domain.

At 528, the reporting procedure 500 may include differentiated charging and user data monitoring by the billing domain. The billing domain may receive and process the CDR files from the CDF/OCS to provide the differentiated charging for usage of the licensed/unlicensed spectrum. In this manner, an operator may be able to appropriately account for opportunistic, real-time use of unlicensed spectrum within an access network, whether through WLAN/LTE aggregation or LTE-U/LAA, on a per-bearer/per-user basis. Furthermore, providing the processes and architectures shown herein may allow for this accounting to be performed without excessive signaling within a network.

In various embodiments, different operations of the reporting procedure 500 may be performed by entities other than those shown with respect to Figure 5. For example, in some embodiments some or all of the differentiated charging and user data monitoring may be performed by network entities other than the billing domain, such as by the OCS.

In some embodiments, the operations described herein may be performed by a particular device as a result of one or more processors executing instructions stored on one or more non-transitory, computer-readable media (for example, memory/storage 406 of Figure 4). The scope of the invention is defined by the appended claims.

## Claims

1. An apparatus (404) to be employed in an evolved node B, eNB (104, 204, 304, 400), the apparatus (404) comprising:
a collection circuitry (416) configured to collect information about licensed and unlicensed spectrum resource usage related to individual evolved packet system, EPS, bearers of a plurality of EPS bearers that provide access to a cellular network using one or more radio access technologies;
a signaling circuitry (420), coupled with the collection circuitry (416), and configured to transmit an indication of the collected information about the one or more EPS bearers to a network node (108, 112, 208, 212, 308, 312) in a core network, wherein the network node is a charging data function (108, 208, 308) or an online charging system (112, 212, 312);
wherein the indication includes a report of characteristics of traffic offloaded to resources in an unlicensed spectrum, wherein the report includes, for respective EPS bearers with traffic offloaded to resources in the unlicensed spectrum, a bearer identifier of the respective EPS bearer, a bearer offload time indicative of the amount of time the respective EPS bearer has been offloaded to the unlicensed spectrum since the last reporting, an offload volume of traffic offloaded to the respective EPS bearer in the downlink since the last reporting, and an offload volume of traffic offloaded to the respective EPS bearer in the uplink since the last reporting.

2. The apparatus of claim 1, wherein the signaling circuitry (420) is configured to transmit the collected information about the one or more EPS bearers to the network node via a direct interface to said network node.

3. The apparatus (404) of claim 2, wherein the network node is the charging data function (108, 208, 308) and the direct interface is an Rf' interface.

4. The apparatus (404) of claim 2, wherein the network node is the online charging system (112, 212, 312) and the direct interface is a Gy' or Ro' interface.

5. The apparatus of one of claims 1 to 4, wherein the signaling circuitry (420) is configured to transmit the collected information about the one or more EPS bearers periodically.

6. The apparatus of one of claims 1 to 4, wherein the signaling circuitry (420) is configured to transmit the collected information about the one or more EPS bearers in response to a trigger event related to predetermined usage limits based on traffic volume or time.

7. One or more computer-readable media having instructions that, when executed by an evolved node B, eNB (104, 204, 304, 400), cause the eNB (104, 204, 304, 400), to:
collect information related to licensed and unlicensed spectrum resource usage related to evolved packet system, EPS, bearers of a plurality of EPS bearers that provide access to a cellular network using one or more radio access technologies;
transmit an indication of the collected information related to the spectrum resource usage to a network node (108, 112, 208, 212, 308, 312) in a core network of the wireless network based on detecting a trigger event, wherein the network node is a charging data function (108, 208, 308) or an online charging system (112, 212, 312);
wherein the indication includes a report of characteristics of traffic offloaded to resources in an unlicensed spectrum, wherein the report includes, for respective EPS bearers with traffic offloaded to resources in the unlicensed spectrum, a bearer identifier of the respective EPS bearer, a bearer offload time indicative of the amount of time the respective EPS bearer has been offloaded to the unlicensed spectrum since the last reporting, an offload volume of traffic offloaded to the respective EPS bearer in the downlink since the last reporting, and an offload volume of traffic offloaded to the respective EPS bearer in the uplink since the last reporting.

8. The one or more computer-readable media of claim 7, wherein execution of the instructions configures the eNB (104, 204, 304, 400) to transmit the collected information about the one or more EPS bearers to the network node via a direct interface to said network node.

9. The one or more computer-readable media of claim 8, wherein the network node is the charging data function (108, 208, 308) and the direct interface is an Rf' interface.

10. The one or more computer-readable media of claim 8, wherein the network node is the online charging system (112, 212, 312) and the direct interface is a Gy' or Ro' interface.

11. The one or more computer-readable media of one of claims 7 to 10, wherein execution of the instructions configures the eNB (104, 204, 304, 400) to transmit the collected information about the one or more EPS bearers periodically.

12. The one or more computer-readable media of one of claims 7 to 10, wherein execution of the instructions configures the eNB (104, 204, 304, 400) to transmit the collected information about the one or more EPS bearers in response to a trigger event related to predetermined usage limits based on traffic volume or time.

## Patentansprüche

1. Vorrichtung (404) zum Verwenden in einem Evolved Node B, eNB (104, 204, 304, 400), die Vorrichtung (404) umfassend:
eine Sammelschaltung (416), die konfiguriert ist, um Information über lizenzierte und nicht lizenzierte Spektrumsressourcennutzung in Bezug auf einzelne Evolved Packet System, EPS, Träger einer Vielzahl von EPS-Trägern zu sammeln, die Zugang zu einem zellularen Netzwerk unter Verwendung einer oder mehrerer Funkzugangstechnologien bereitstellen; und
eine Signalisierungsschaltung (420), die mit der Sammelschaltung (416) gekoppelt ist, und konfiguriert ist, um eine Anzeige der gesammelten Information über den einen oder die mehreren EPS-Träger an einen Netzwerkknoten (108, 112, 208, 212, 308,312) in einem Kernnetzwerk zu übertragen, wobei der Netzwerkknoten eine Abrechnungsdatenfunktion (108, 208, 308) oder ein Online-Abrechnungssystem (112, 212, 312) ist;
wobei die Anzeige eine Meldung über Charakteristiken von Verkehr, die auf Ressourcen in einem nicht lizenzierten Spektrum entladen wird, beinhaltet, wobei die Meldung für jeweilige EPS-Träger mit Verkehr, der auf Ressourcen in dem nicht lizenzierten Spektrum entladen wird, eine Trägerkennung des jeweiligen EPS-Trägers, eine Träger-Entlade-Zeit, die die Zeitspanne anzeigt, in der der jeweilige EPS-Träger seit der letzten Meldung in das unlizenzierte Spektrum entladen wurde, ein Endladevolumen von Verkehr, das seit der letzten Meldung im Downlink auf den jeweiligen EPS-Träger entladen wurde, und ein Entladevolumen von Verkehr, das seit der letzten Meldung in dem Uplink auf den jeweiligen EPS-Träger entladen wurde, beinhaltet.

2. Vorrichtung nach Anspruch 1, wobei die Signalisierungsschaltung (420) so konfiguriert ist, dass sie die gesammelte Information über den einen oder die mehreren EPS-Träger über eine direkte Schnittstelle zu dem Netzwerkknoten an den Netzwerkknoten überträgt.

3. Vorrichtung (404) nach Anspruch 2, wobei der Netzwerkknoten die Abrechnungsdatenfunktion (108, 208, 308) und die direkte Schnittstelle eine Rf' Schnittstelle ist.

4. Vorrichtung (404) nach Anspruch 2, wobei der Netzwerkknoten das Online-Abrechnungssystem (112, 212, 312) und die direkte Schnittstelle eine Gy'- oder Ro'-Schnittstelle ist.

5. Vorrichtung nach einem der Ansprüche 1 bis 4, wobei die Signalisierungsschaltung (420) so konfiguriert ist, dass sie die gesammelte Information über den einen oder die mehreren EPS-Träger periodisch überträgt.

6. Vorrichtung nach einem der Ansprüche 1 bis 4, wobei die Signalisierungsschaltung (420) so konfiguriert ist, dass sie die gesammelte Information über den einen oder die mehreren EPS-Träger als Reaktion auf ein Auslöseereignis überträgt, das sich auf vorbestimmte Nutzungsgrenzen auf der Grundlage von Verkehrsvolumen oder Zeit bezieht.

7. Ein oder mehrere computerlesbare Medien mit Anweisungen, die, wenn sie von einem Evolved Node B, eNB (104, 204, 304, 400) ausgeführt werden, den eNB (104, 204, 304, 400) veranlassen zum:
Sammeln von Information, die sich auf lizenzierte und nicht lizenzierte Spektrumsressourcennutzung in Bezug auf einen Evolved Packet System, EPS, Träger einer Vielzahl von EPS-Trägern bezieht, die Zugang zu einem zellularen Netzwerk unter Verwendung einer oder mehrerer Funkzugangstechnologien bereitstellen;
Übertragen einer Anzeige von der gesammelten Information in Bezug auf die Spektrumsressourcennutzung an einen Netzwerkknoten (108, 112, 208, 212, 308, 312) in einem Kernnetzwerk des drahtlosen Netzwerks auf der Grundlage von Erfassen eines Auslöseereignisses,
wobei der Netzwerkknoten eine Abrechnungsdatenfunktion (108, 208, 308) oder ein Online-Abrechnungssystem (112, 212, 312) ist;
wobei die Anzeige eine Meldung über Charakteristiken von Verkehr beinhaltet, die auf Ressourcen in einem nicht lizenzierten Spektrum entladen wird, wobei die Meldung für jeweilige EPS-Träger mit Verkehr, der auf Ressourcen in dem nicht lizenzierten Spektrum entladen wird, eine Trägerkennung des jeweiligen EPS-Trägers, eine Träger- Entlade-Zeit, die die Zeitspanne anzeigt, in der der jeweilige EPS-Träger seit der letzten Meldung in das unlizenzierte Spektrum entladen wurde, ein Entladevolumen von Verkehr, das seit der letzten Meldung in dem Downlink auf den jeweiligen EPS-Träger entladen wurde, und ein Entladevolumen von Verkehr, das seit der letzten Meldung in dem Uplink auf den jeweiligen EPS-Träger entladen wurde, beinhaltet.

8. Ein oder mehrere computerlesbare Medien nach Anspruch 7, wobei Ausführen der Anweisungen den eNB (104, 204, 304, 400) konfiguriert, um die gesammelte Information über den einen oder die mehreren EPS-Träger über eine direkte Schnittstelle zu dem Netzwerkknoten zu übertragen.

9. Ein oder mehrere computerlesbare Medien nach Anspruch 8, wobei der Netzwerkknoten die Abrechnungsdatenfunktion (108, 208, 308) und die direkte Schnittstelle eine Rf' Schnittstelle ist.

10. Ein oder mehrere computerlesbare Medien nach Anspruch 8, wobei der Netzwerkknoten das Online-Abrechnungssystem (112, 212, 312) ist und die direkte Schnittstelle eine Gy'- oder Ro'-Schnittstelle ist.

11. Ein oder mehrere computerlesbare Medien nach einem der Ansprüche 7 bis 10, wobei Ausführen der Anweisungen den eNB (104, 204, 304, 400) konfiguriert, um die gesammelte Information über einen oder mehrere EPS-Träger periodisch zu übertragen.

12. Ein oder mehrere computerlesbare Medien nach einem der Ansprüche 7 bis 10, wobei Ausführen der Anweisungen den eNB (104, 204, 304, 400) konfiguriert, um die gesammelte Information über den einen oder die mehreren EPS-Träger als Reaktion auf ein Auslöseereignis zu übertragen, das sich auf vorbestimmte Nutzungsgrenzen auf der Grundlage von Verkehrsvolumens oder Zeit bezieht.

## Revendications

1. Un appareil (404) destiné à être employé dans un nœud B évolué, eNB (104, 204, 304, 400), l'appareil (404) comprenant :
un ensemble de circuits de collecte (416) configurés pour collecter des informations sur l'utilisation sous licence et sans licence de ressources de spectre liées à des bearers individuels de système par paquets évolué, EPS, d'une pluralité de bearers EPS qui fournissent un accès à un réseau cellulaire utilisant une ou plusieurs technologies d'accès radio ; et
un ensemble de circuits de signalisation (420), couplé à l'ensemble de circuits de collecte (416), et configuré pour transmettre une indication des informations collectées sur les un ou plusieurs bearers EPS à un nœud de réseau (108, 112, 208, 212, 308, 312) dans un réseau central, dans lequel le nœud de réseau est une fonction de donnée de facturation (108, 208, 308) ou un système de facturation en ligne (112, 212, 312) ;
dans lequel l'indication comporte un rapport de caractéristiques du trafic déchargé vers les ressources dans un spectre sans licence, dans lequel le rapport comporte, pour des bearers EPS respectifs avec un trafic déchargé vers les ressources dans le spectre sans licence, un identifiant de bearer du bearer EPS respectif, un temps de déchargement de bearer indicatif du temps pendant lequel le bearer EPS respectif a été déchargé vers le spectre sans licence depuis la dernière déclaration, un volume de déchargement du trafic déchargé vers le bearer EPS respectif sur la liaison descendante depuis la dernière déclaration, et un volume de déchargement du trafic déchargé vers le bearer EPS respectif sur la liaison montante depuis la dernière déclaration.

2. L'appareil selon la revendication 1, dans lequel l'ensemble de circuits de signalisation (420) est configuré pour transmettre les informations collectées sur les un ou plusieurs bearers EPS au nœud de réseau via une interface directe avec ledit nœud de réseau.

3. L'appareil (404) selon la revendication 2, dans lequel le nœud de réseau est la fonction de donnée de facturation (108, 208, 308) et l'interface directe est une interface Rf'.

4. L'appareil (404) selon la revendication 2, dans lequel le nœud de réseau est le système de facturation en ligne (112, 212, 312) et l'interface directe est une interface Gy' ou Ro'.

5. L'appareil selon l'une des revendications 1 à 4, dans lequel l'ensemble de circuits de signalisation (420) est configuré pour transmettre les informations collectées périodiquement sur les un ou plusieurs bearers EPS.

6. L'appareil selon l'une des revendications 1 à 4, dans lequel l'ensemble de circuits de signalisation (420) est configuré pour transmettre les informations collectées sur les un ou plusieurs bearers EPS en réponse à un événement déclencheur lié à des limites d'utilisation prédéterminées basées sur le volume de trafic ou le temps.

7. Un ou plusieurs supports lisibles par ordinateur ayant des instructions qui, lorsqu'elles sont exécutées par un nœud B évolué, eNB (104, 204, 304, 400), amènent l'eNB (104, 204, 304, 400) à :
collecter des informations liées à l'utilisation sous licence et sans licence de ressources de spectre liées à des bearers de système par paquets évolué, EPS, d'une pluralité de bearers EPS qui fournissent un accès à un réseau cellulaire utilisant une ou plusieurs technologies d'accès radio ;
transmettre une indication des informations collectées liées à l'utilisation de ressources de spectre à un nœud de réseau (108, 112, 208, 212, 308, 312) dans un réseau central du réseau sans fil, sur la base de la détection d'un événement déclencheur,
dans lesquels le nœud de réseau est une fonction de donnée de facturation (108, 208, 308) ou un système de facturation en ligne (112, 212, 312) ;
dans lesquels l'indication comporte un rapport de caractéristiques du trafic déchargé vers les ressources dans un spectre sans licence, dans lesquels le rapport comporte, pour des bearers EPS respectifs avec un trafic déchargé vers les ressources dans le spectre sans licence, un identifiant de bearer du bearer EPS respectif, un temps de déchargement de bearer indicatif du temps pendant lequel le bearer EPS respectif a été déchargé vers le spectre sans licence depuis la dernière déclaration, un volume de déchargement du trafic déchargé vers le bearer EPS respectif sur la liaison descendante depuis la dernière déclaration, et un volume de déchargement du trafic déchargé vers le bearer EPS respectif sur la liaison montante depuis la dernière déclaration.

8. Les un ou plusieurs supports lisibles par ordinateur selon la revendication 7, dans lesquels l'exécution des instructions configure l'eNB (104, 204, 304, 400) pour transmettre les informations collectées sur les un ou plusieurs bearers EPS au nœud de réseau via une interface directe avec ledit nœud de réseau.

9. Les un ou plusieurs supports lisibles par ordinateur selon la revendication 8, dans lesquels le nœud de réseau est la fonction de donnée de facturation (108, 208, 308) et l'interface directe est une interface Rf'.

10. Les un ou plusieurs supports lisibles par ordinateur selon la revendication 8, dans lesquels le nœud de réseau est le système de facturation en ligne (112, 212, 312) et l'interface directe est une interface Gy' ou Ro'.

11. Les un ou plusieurs supports lisibles par ordinateur selon l'une des revendications 7 à 10, dans lesquels l'exécution des instructions configure l'eNB (104, 204, 304, 400) pour transmettre périodiquement les informations collectées sur les un ou plusieurs bearers EPS.

12. Les un ou plusieurs supports lisibles par ordinateur selon l'une des revendications 7 à 10, dans lesquels l'exécution des instructions configure l'eNB (104, 204, 304, 400) pour transmettre les informations collectées sur les un ou plusieurs bearers EPS dans en réponse à un événement déclencheur lié à des limites d'utilisation prédéterminées basées sur le volume de trafic ou le temps.
